Europäisches Patentamt

European Patent Office

Office européen des brevets

(11) Publication number: **0 445 544 A2**

# EUROPEAN PATENT APPLICATION

(21) Application number: **91101771.3**

(22) Date of filing: **08.02.91**

(51) Int. Cl.5: **F16L 27/107**

(30) Priority: **07.03.90 IT 1958690**

(43) Date of publication of application:
**11.09.91 Bulletin 91/37**

(84) Designated Contracting States:
**DE FR GB**

(71) Applicant: **PIRELLI SISTEMI ANTIVIBRANTI S.P.A.**
**Piazzale Cadorna, 5**
**I-20123 Milan(IT)**

(72) Inventor: **Storti, Stelio**
**Piazza Melozzo da Forli, 11**
**I-20148 Milan(IT)**

(74) Representative: **Giannesi, Pier Giovanni et al**
**Pirelli S.p.A. Direzione Brevetti Piazzale**
**Cadorna, 5**
**I-20123 Milano(IT)**

(54) Flexible expansion joint for piping and process to manufacture the same.

(57) It is described a joint having an annular body made of elastomeric material reinforced with textile structures and provided with a flexible main portion of a substantially U-shaped profile, to the opposite edges of which two substantially cylindrical connecting portions are joined.

Radially extending from said connecting portions are two attachment portions each designed to be engaged between the flange of a pipe and a corresponding closure counterflange.

The joint body also has a substantially cylindrical flexible plugging portion extending between the connecting portions in order to avoid the loop formed by the main flexible portion giving rise to load losses in connection with the flow motion of the fluid passing through the pipes mutually connected by the joint. Also described is the process for manufacturing the above joint.

The present invention relates to a flexible expansion joint for piping, of the type comprising an annular body of elastomeric material having a flexible main portion of a substantially U-shaped profile the concavity of which faces the joint axis, two cylindrical connecting portions extending from the opposite ends of the flexible portion and two attachment portions extending radially from the connecting portions away from the joint axis.

In greater detail, the joint in question is of the type commonly used in accomplishing fluid transporting and dispensing systems, such as for example centralized heating plants, drinkable water dispensing systems, cooling systems in thermoelectric power plants and in nuclear power plants, pneumatic transport plants for loose materials or water-suspension materials and so on, in order to consecutively connect two pipes while keeping some possibility of axial displacement and offset alignment between the pipes.

It is known that in the accomplishment of plants of the above type, the connection in mutual alignment of the various pipes is often carried out by interposing suitable flexible expansion joints therebetween.

These joints have the characteristic of ensuring a perfect sealing in the junction area between the pipes and an excellent mechanical strength while keeping, within certain limits, the possibility of axial displacements and offset alignments between the connected pipes.

This is indispensable for absorbing the pipe variations in length due to unavoidably present thermal expansions as well as in order to compensate for any possible misalignment and/or mutual axial displacement that the pipes may have during the assembling step or as a result of subsequent settlings.

Presently, the flexible expansion joints that are most widely used in the field in question have an annular body made of elastomeric material incorporating textile or metal reinforcement structures and such conformed that it has a flexible main portion having a substantially U-shaped profile the concavity of which faces the joint axis.

Symmetrically extending from the opposite edges of the flexible portion are two substantially cylindrical connecting portions followed by two attachment portions radially projecting away from the joint axis.

Each attachment portion lends itself to be held between a flange exhibited by one of the pipes to be connected and a closure counter-flange clamped against the flange by threaded elements.

While perfectly performing the intended functions, the joints of the above described type have the drawback of involving important load losses in the piping in which they are mounted.

In fact the loop formed in the flexible portion is believed to break the streamline motion of the fluid within the pipes and give rise to swirling motions of the fluid, bringing about load losses which can be compared to the load losses present in about forty meters of rectilinear pipeline exhibiting no discontinuity.

Also known are joints the flexible portion of which is of substantially cylindrical configuration and is so arranged that there is a gap between the inner surface thereof and the inner surfaces of the pipes to be connected to the joint itself.

Joints of this type eliminate the problem of load losses but, on the other hand, do not have a sufficient degree of flexibility and adaptability to possible mutual displacements of the pipes as a result of thermal expansions and/or settlings after the setting up.

Attemps have been made in order to reduce the load losses in joints having a flexible U-shaped portion such as to insert a cylindrical metal collar in the joint which is provided, along its end edge facing away from the advance direction of the fluid in the piping, with a fastening flange interposed between one of the joint attachment portions and the flange of the corresponding pipe.

The above collar substantially constitutes a fairing for the loop formed by the flexible portion, giving rise, as a result, to an important reduction in the load losses at the joint.

It is to be pointed out however that, since the cylindrical collar must necessarily have a lower inner diameter than the inner diameter of the pipes in order to enable axial misalignment between the latter, its presence unavoidably gives rise to a certain load loss.

In particular it is clear that the joint must be capable of enabling the movement of one part relative to the other: as a consequence the clearance between the diameter of the rubber part ant the outer diameter of the collar must be equal to the required transverse displacement.

This involves a sudden reduction in the collar diameter that consequently brings about important load losses.

The main object of the present invention is substantially to solve the problems of the known art by providing an expansion joint having a high degree of adaptability to misalignments and mutual displacements between the pipes and at the same time so arranged that its presence does not give rise to an important increase in the load losses in the piping.

The foregoing and further objects that will become more apparent in the course of the following description are substantially attained by a flexible expansion joint for piping, characterized in that said annular body also has at least a substantially cylindrical flexible plugging portion extending between the connecting portions of the part facing the joint axis and having at least one end joined in a single piece to one of said connecting portions.

Further features and advantages will best be understood from the detailed description of a preferred embodiment of a flexible expansion joint for piping in accordance with the present invention given hereinafter by way of non-limiting example with reference to the accompanying drawings, in which:

- Fig. 1 is a fragmentary diametrical view in section of the joint of the invention operatively engaged between two pipes;

- Fig. 2 is an enlarged detail of the joint shown in Fig. 1, in which the behaviour of a plugging portion of the joint is shown as a result of an axial approaching of the pipes;

- Fig. 3 is a fragmentary sectional view to an enlarged scale of the plugging portion in accordance with a further embodiment of the joint;

- Fig. 4 is a fragmentary diametrical view showing an alternative embodiment of the joint;

- Fig. 5 is a sectional view showing an operating step for the accomplishment of the joint in question;

- Fig. 6 is a sectional view showing a further operating step for the accomplishment of the joint.

Referring to the drawings, a flexible expansion joint for piping in accordance with the present invention has been generally identified by reference numeral 1.

The expansion joint 1 has an annular body 1a made of elastomeric material, preferably provided with textile reinforcement structures 17b and 19b incorporated therein and such shaped that it exhibits a flexible main portion 2 of substantially U-shaped profile the concavity of which faces the axis of the joint itself.

Symmetrically extending from the opposite end edges of the flexible main portion 2 are two cylindrical connecting portions 3 followed by two attachment portions 4 extending radially away from the joint axis.

Each of the attachment portions 4 lends itself to be held between a flange 5 carried by one end of a pipe 6 and a counter-flange 7 which is connected to the flange itself by threaded members 8 operatively crossing through holes 4a, 5a, 7a circumferentially distributed on the attachment portion 4, flange 5 and counter-flange 7.

Due to the wide field of use of the joint in question which can be mounted to pipes having an inner diameter indicatively varying from 40 mm to 4,000 mm and working pressures varying from 1 bar to 15 bar, the sizes of the annular body 1a can greatly change depending upon uses.

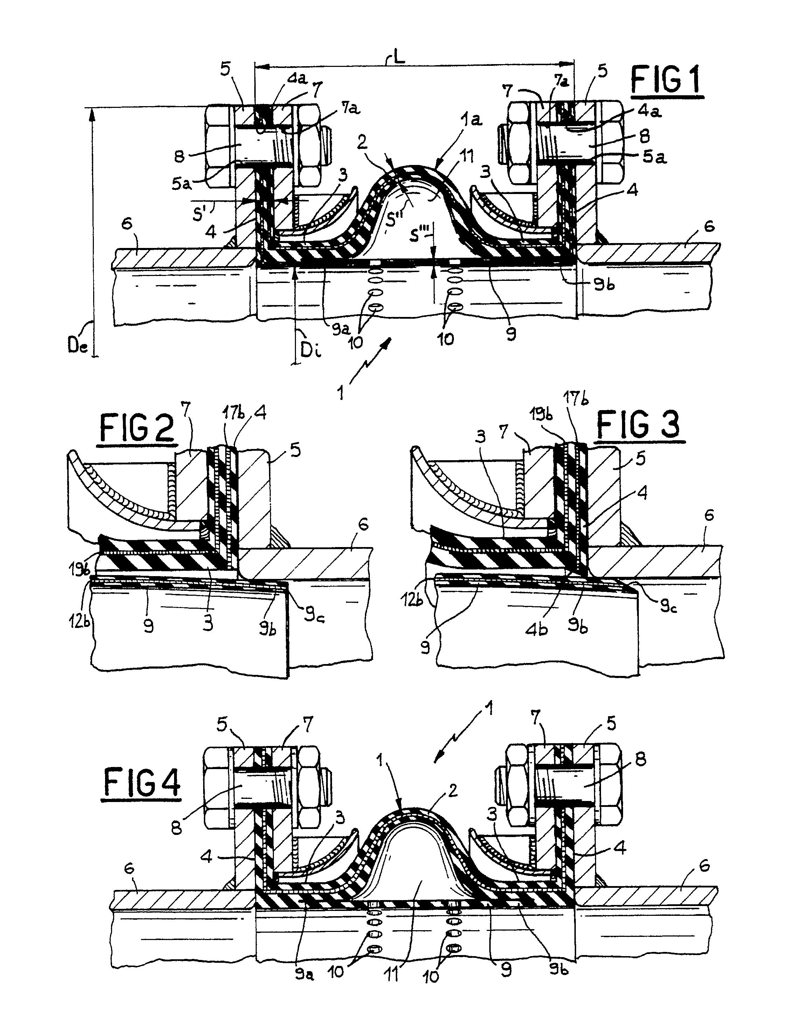

By way of example, the width of the annular body 1a, denoted by L in Fig. 1, can take any value in the range of 100 mm to 500 mm, its inner diameter Di coinciding with that of pipes 6 can vary from 20 mm to 4,000 mm, its outer diameter De, measured at the free end edges of the attachment portions 4, can take a value ranging between 90 mm and 4,900 mm. The thickness S' measured at the flexible main portion 2 is included between 2 mm and 30 mm. The thickness S'' measured at the attachment portions 4 is in the range of 2 mm to 30 mm as well.

In accordance with the invention, the annular body 1a also has at least a flexible substantially cylindrical plugging portion 9 extending between the connecting portions 3 on the side facing the joint 1 axis, so as to define the inner diameter Di of the joint itself.

The plugging portion 9 made of an elastomeric material optionally reinforced with textile structures 12b or the like, has a thickness S''' in the range of 2 mm to 10 mm, depending upon the use, and exhibits at least one end edge 9a unitary with one of the connecting portions 3, preferably at the junction area between the connecting portion and the respective attachment portion 4.

Referring to the embodiments shown in Figs. 1 to 3, the plugging portion 9 has a second end edge 9b which is free, that is not engaged with the corresponding connecting portion 3, and ends flush with the respective attachment portion 4.

In greater detail, in the embodiment shown in Figs. 1 and 2 the free end edge 9b is provided to have an end surface 9c disposed at right angles to the longitudinal extension of the flexible portion 9.

In the embodiment shown in Fig. 3, on the contrary, the end surface 9c of the free end edge 9b exhibits an inclined orientation and faces the respective attachment portion 4.

Still referring to Fig. 3, the end surface 9c is also designed to act in abutment against an inclined surface 4b internally defined by the attachment portion 4.

With reference to the present invention, the plugging portion 9 is provided with at least a through hole 10 formed in the area included between the connecting portions 3 and designed to establish a fluid communication between the inner area of joint 1 and a chamber 11 defined between the plugging portion itself and the loop formed by the flexible main portion 2 of the annular body 1a. Preferably two series of through holes 10 are provided which are circumferentially distributed on the plugging portion 9, as shown in the accompanying drawings.

Operation of the joint in the embodiments shown in Figs. 1 to 3, described above mainly as regards structure is as follows.

The assembling of joint 1 to pipes 6 to be connected takes place in the same manner as presently done as far as conventional joints are concerned, and therefore does not need particular explanations.

When the setting up has taken place, the plugging portion 9 is advantageously disposed so that the inner surfaces thereof extend in solution of continuity with the inner surfaces of pipes 6.

Under this situation when fluid under pressure is sent through pipes 6, due to the plugging portion 9, the presence of the loop formed by the flexible main portion 2 does not give rise to any load loss in connection with the fluid motion.

It is in fact to be pointed out that the fluid under pressure sent into pipes 6 is liable to instantaneously pass through the through holes 10 in order to fill the chamber 11 defined between the flexible main portion 2 and the plugging portion 9.

When this short temporary starting step has been overcome, the fluid motion through the joint 1 takes place in a condition of substantially streamline motion, with load losses per axial extension unit that are comparable to those obtainable in pipes 6.

As is apparent from Figs. 2 and 3, by virtue of the flexibility and relatively reduced thickness of the plugging portion 9, the free end edge 9b of the plugging portion itself lends itself to be introduced into the end of the respective pipe 6, while substantially remaining flush with the inner surface of the latter, when the mutual approaching of the pipe ends occurs as a result of thermal expansions, settlings and/or misalignments produced in the pipes during the assembling step.

Therefore under this situation too the fluid streamline motion along pipes 6 is not subjected to be greatly disturbed.

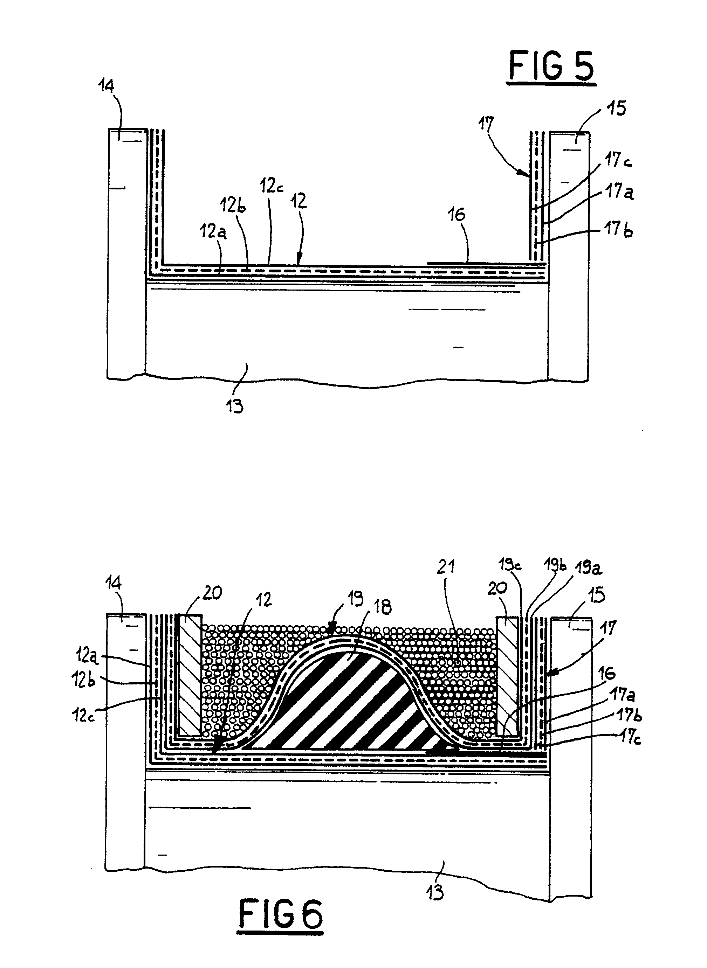

Fig. 4 shows a further embodiment of the joint in reference according to which the plugging portion 9 exhibits both its end edges 9a, 9b unitary with the corresponding connecting portions 3.

In this case, unlike the description given with reference to the embodiments shown in Figs. 1, 2 and 3, the connecting portion 9 is designed to follow the mutual displacements between the ends of pipes 6 by elastically becoming shorter or longer and keeping flush with the inner surfaces of the pipes.

In Figs. 5 and 6 two steps being part of the process for manufacturing the joint of the invention are diagrammatically shown by way of example only.

The process which also is an integrating part of the present invention is comprised of a step in which one base layer 12 including at least a sheet of elastomeric material is engaged about a cylindrical core 13 provided with a first and a second flange shoulder 14, 15 axially spaced apart by an amount equal to the width L to be given to the finished joint.

Preferably, the first base layer 12 is obtained by the superposition in succession of a first elastomeric sheet 12a on the core 13, followed by a textile reinforcement sheet 12b and a second elastomeric sheet 12c.

When the operation is over the first base layer 12 is disposed according to a substantially L-shaped configuration on the core 13 and against the first flange shoulder 14.

According to the next step of the process in question, a separation strip 16 made of antiadhesive material is provided to be superposed on one of the edges of the first base layer 12 and more particularly on the edge facing the second flange shoulder 15.

In addition a second base layer 17 comprising at least a sheet of elastomeric material is provided to be engaged against the second flange shoulder 15.

In the embodiment shown the second base layer 17 is obtained by disposing a first elastomeric sheet 17a against the flange shoulder 15 followed in succession by a superposed textile reinforcement sheet 17b and a second superposed elastomeric sheet 17c.

Referring to Fig. 6, an annular filling element 18 is subsequently engaged about the core 13. This filling element 18 made for example of vulcanized rubber, has a substantially semicircular section and is placed on the base layer 12 at an axially centered position between the flange shoulders 14, 15.

Then a covering layer comprising at least a sheet of elastomeric material paired with a textile reinforcement sheet is located about the core 13.

In greater detail, as described with reference to the base layers 12 and 17, the covering layer 19 is preferably obtained by disposing a first elastomeric sheet 19a, a textile reinforcement sheet 19b and a second elastomeric sheet 19c about the core 13 in succession and in superposed relation.

At the end of the operation the covering layer 19 integrally covers the filling element 18, the first base layer 12 and the second base layer 17, as clearly shown in Fig. 6.

The product being worked must then be submitted to a vulcanization step.

In known and conventional manner, before the above operation two vulcanization counterflanges 20 are preferably provided to be engaged in thrust relation against the flange shoulders 14, 15 so that the covering layer 19 and base layers 12 and 17 may be held against the flange shoulders.

Then the wrapping material 21 is wound about the core 13 within the space defined between the vulcanization counterflanges 20.

The wrapping material 21, consisting for example of nylon cords or other synthetic or vegetable fibers, aims at fixing the positioning of the base layers 12 and 17 and the covering layer 19 before carrying out the vulcanization step.

At the end of the vulcanization step, not described as known per se, the joint 1 thus obtained is released from the core 13 after removing the wrapping material 21 and counterflanges 20. It is to be noted that the presence of the separation strip 16 has prevented the occurrence of any physical contact of the first base layer 12 with the covering layer 19 and the second base layer 17 in the area included between the corresponding end edge of the first base layer and the annular filling element 18.

Therefore the portion of the base layer that was in contact with the core 13 constitutes said flexible plugging portion 9 and lends itself to be spread apart from the remaining parts of the annular body 1a in order to enable the annular filling element 18 and separation strip 16 to be removed.

When the above operation is over, through holes 4a are formed on the attachment portions 4 and through holes 10 are formed on the flexible plugging portion 9.

The present invention attains the intended purposes.

It is in fact to be pointed out that with the use of the joint of the invention it is possible to achieve particular features of flexibility and adaptability to the mutual displacements of the pipes, which features are typical of the known joints provided with a flexible U-shaped portion, while at the same time very low load losses are obtained in the junction area between the pipes, which property is typical of the joints having a cylindrical flexible portion.

Obviously modifications and variations can be made to the invention as conceived, all of them falling within the scope of the inventive idea characterizing it.

**Claims**

1. A flexible expansion joint for piping comprising an annular body made of elastomeric material having:
   - a flexible main portion of a substantially U-shaped profile the concavity of which faces the joint axis;
   - two cylindrical connecting portions extending from the opposite ends of the flexible portion; and
   - two attachment portions extending radially from the connecting portions away from the joint axis,
   characterized in that said annular body also has at least a substantially cylindrical flexible plugging portion extending between the connecting portions on the side facing the joint axis, and at least one end joined in a single piece to one of said connecting portions.

2. An expansion joint according to claim 1, characterized in that said flexible plugging portion has at least a through hole disposed close to the main flexible portion.

3. An expansion joint according to claim 1, characterized in that said flexible plugging portion has two series of through holes circumferentially distributed in register with the main flexible portion.

4. An expansion joint according to claim 1, characterized in that the flexible plugging portion is joined in a single piece to one of the connecting portions in the junction area connecting it to the corresponding attachment portion and has a free end edge terminating flush with the other attachment portion.

5. An expansion joint according to claim 4, characterized in that the free edge of the flexible plugging portion has an end surface perpendicuarly facing the longitudinal extension of the plugging portion.

6. An expansion joint according to claim 4, characterized in that the free edge of the flexible plugging portion has a tapered end portion exhibiting an inclined orientation facing the corresponding attachment portion and designed to act in abutment on an inclined surface offered by the attachment portion at the lower part thereof.

7. An expansion joint according to claim 1, characterized in that said flexible plugging portion is rigidly fastened to the connecting portion at the respective opposite ends thereof.

8. An expansion joint according to claim 1, characterized in that said flexible plugging portion is made of an elastomeric material provided with at least a textile reinforcement layer.

9. A process to manufacture a flexible expansion joint for piping, characterized in that it comprises the following steps:
   - engaging one elastomeric base layer comprising at least a sheet of elastomeric material onto a cylindrical core provided with one flange shoulder and a second flange shoulder axially spaced apart from each other, said first elastomeric base layer being disposed according to a substantially L-shaped configuration against the core and the first flange shoulder;

- disposing a separation strip made of antiadhesive material on the base layer close to one end edge thereof facing the second flange shoulder;

- engaging a second elastomeric base layer comprising at least a sheet of elastomeric material against the second flange shoulder;

- engaging an annular filling element of substantially semicircular section about the core, said annular element being placed on the first base layer in an axially centered position between said flange shoulders;

- engaging a covering layer comprised of at least a sheet of elastomeric material paired with at least a textile reinforcement sheet about the core, said layer integrally covering the filling element and said elastomeric base layers;

- disposing two vulcanization counterflanges in thrust relation against the flange shoulders in order to hold the covering layers and base layers against the flange shoulders;

- winding up a wrapping material about the core so as to fix the positioning of the covering layer and base layers;

- vulcanizing the joint being worked;

- releasing the vulcanized joint from the core;

- removing the filling element and the separation strip from the joint thus obtained.

10. A process according to claim 9, characterized in that the engagement of the first elastomeric base layer on the core involves the following steps:

- winding one sheet of elastomeric material about the core;

- superposing a textile reinforcement sheet on the first elastomeric sheet;

- superposing a second elastomeric sheet on the textile reinforcement sheet.

FIG 1

FIG 2

FIG 3

FIG 4

## FIG 5

## FIG 6